# EUROPÄISCHE PATENTSCHRIFT

(11) **EP 1 265 020 B1**
(45) Veröffentlichungstag und Bekanntmachung des Hinweises auf die Patenterteilung: **11.08.2004**
(21) Anmeldenummer: 02011721.4
(22) Anmeldetag: 25.05.2002
(51) Int. Cl.: F16L 39/02, F16L 25/00

(54) **Flexible Gasleitung**
Flexible gas conduit
Conduite flexible de gaz

(30) Priorität: 08.06.2001 DE 10128030
(43) Veröffentlichungstag der Anmeldung: 11.12.2002
(73) Patentinhaber: Witzenmann GmbH, 75175 Pforzheim (DE)
(72) Erfinder: Tuncsik, Christoph, 75334 Straubenhardt (DE); Schüttler, Peter, 75223 Niefern-Öschelbronn (DE)
(74) Vertreter: Blumenröhr, Dietrich

(56) Entgegenhaltungen:
- DE-A- 3 151 845
- DE-C- 690 748
- DE-U- 29 511 691
- GB-A- 797 499
- GB-A- 933 172
- US-A- 3 058 493

## Beschreibung

Die Erfindung betrifft eine flexible Gasleitung, insbesondere für den Anschluss von Gashaushaltsgeräten an Gasanschlussdosen und ähnliche Anschlusselemente, bestehend aus einem mit endständigen Anschlussenden versehenen gewellten Metallschlauch, einer äußeren Ummantelung und einem Längenbegrenzungselement für den Metallschlauch.

Üblicherweise bestehen solche Gasleitungen - wie sie beispielsweise aus der gattungsbildenden EP 0 857 905 bekannt ist - aus einem innenliegenden ringgewellten Metallschlauch, einem den Metallschlauch umgebenden Geflechtsschlauch aus sich kreuzenden Metalldrähten, der als Längenbegrenzungselement fungiert, und aus einer äußeren Ummantelung aus einem Kunststoffschlauch, der den Metallschlauch und den Geflechtsschlauch gegenüber der äußeren Umgebung abschirmt und beide Schläuche so gegen Schmutz und gegen Beschädigung schützt.

Mit Hilfe derartiger Gasleitungen werden Gasverbrauchergeräte wie beispielsweise Gasherde mit Gas versorgt, wobei die Flexibilität der Gasleitung sowohl die Montage des Gasverbrauchergerätes vereinfacht als auch überhaupt das Bewegen des Gasverbrauchergerätes ermöglicht, beispielsweise wenn dessen nähere Umgebung gereinigt werden soll. Bei Verwendung einer starren Gasleitung wäre dies nicht möglich, vielmehr müsste erst das Gasgerät demontriert und entfernt werden, bevor man beispielsweise den Bereich unterhalb des Gasgerätes reinigen kann.

Demgemäss schreibt auch eine zukünftige europäische Norm eine "gewellte, metallene Sicherheitsgasschlauchleitung für den Anschluss von Haushalts-Gasgeräten" vor, wobei diese flexible Gasleitung unter anderem eine axiale Zuglast von 1000 N ohne Beschädigung aushalten muss, wobei die Längung der Gasleitung nach einer solchen Zugbelastung nicht mehr als 3 % betragen darf. Die zuvor erwähnten Gasleitungen aus Metallschlauch, Metallgeflecht und Kunststoffummantelung erfüllen bei geeigneter Dimensionierung die Kriterien dieser Gasnorm. Daneben existieren auch einzelne nationale Gasnormen, wie beispielsweise die französische Norm NFD 36-121 vom Dezember 1994, in der unter anderem vorgeschrieben wird, dass der Nachweis der beschädigungsfreien Aufnahme einer Zugkraft von 1200 N erbracht werden muss, wobei die Schläuche nach der Entlastung eine Längung von nicht mehr als 2 % erfahren dürfen und wobei die Zugbelastungsversuche nach einer Temperaturwiderstandsprüfung erfolgen müssen, im Zuge derer die Gasleitung einer Temperatur von 450 °C ausgesetzt wird. Dies lässt erkennen, dass in diesem Fall als Material für das Längenbegrenzungselement, also insbesondere den Geflechtsschlauch nur feuerfestes und damit insbesondere metallisches Material in Frage kommt.

Ausgehend von diesen Anforderungen und dem eingangs erwähnten Stand der Technik liegt der vorliegenden Erfindung die Aufgabe zugrunde, die bekannten flexiblen Gasleitungen weiter zu vereinfachen und gleichzeitig aber - bei entsprechender Dimensionierung - die Anforderungen der Normen einzuhalten.

Diese Aufgabe wird erfindungsgemäß dadurch gelöst, dass das Längenbegrenzungselement aus zumindest einem sich parallel zum Metallschlauch zwischen den beiden Anschlussenden erstreckenden und an diesen festgelegten Seilelement besteht, das zwischen Metallschlauch und Ummantelung angeordnet ist. Ein solches Seilelement, das so ausgelegt sein muss, dass es die geforderte bis zu 1200 N betragende Zugkraft aufnehmen kann, kann aus einem Draht, einem Drahtbündel, mehreren parallelen Drähten etc. bestehen und ist somit in jedem Fall weitaus einfacher ausgebildet, herzustellen und handzuhaben als die Geflechtsschläuche des Standes der Technik. Es sei ausdrücklich darauf hingewiesen, dass der Begriff "Seilelement" im Sinne der Erfindung jede Art von Draht, Schnur, Seil und dergleichen und auch eine Mehrzahl parallel geschalteter Schnüre, Drähte, Seile und dergleichen umfasst, solange diese im Unterschied zu dem Geflechtsschlauch des Standes der Technik parallel oder zumindest nur unter geringem Winkel geneigt zur Metallschlauchachse von einem Anschlussende zum anderen Anschlussende verlaufen.

Zwar ist im Stand der Technik aus der DE 6907480 eine Sicherung für Schlauchverbindungen bekannt, die aus einem im Inneren eines glattwandigen Kunststoffschlauches verlegten Drahtseil besteht. Zum einen fehlt dem dort dargestellten Gegenstand ein gewellter Metallschlauch, ein diesen umgebender Geflechtsschlauch sowie eine äußere Kunststoffumhüllung; zum anderen wäre der Kunststoffschlauch des Standes der Technik nicht geeignet und auch nicht dazu zugelassen, für Gasanwendungen verwendet zu werden. Insbesondere aber beeinträchtigt das im Schlauchinneren verlegte Seil den Strömungsquerschnitt und bedeutet zusätzlichen Anschluss- und Abdichtungsaufwand beim Festlegen an eigens in die Schlauchleitung integrierten Seilklemmen.

Bezüglich der Position des Seilelementes sind zwar Varianten möglich: Während der Geflechtsschlauch nur auf der Außenseite des Metallschlauches und zwischen Metallschlauch und Ummantelung angeordnet sein darf, um seine Längenbegrenzungsfunktion zu erfüllen, könnte das Seilelement innerhalb des Metallschlauches und sogar in der Ummantelung selbst angeordnet sein. Erfindungsgemäß ist das Seilelement jedoch zwischen Metallschlauch und Ummantelung angeordnet und ist dadurch mittels der Ummantelung gegenüber der Umgebung geschützt und auch bei etwaigen Relativbewegungen in ständiger geführter Anlage am Metallschlauch gehalten. Außerdem entfallen dort die erwähnten Anschluss- und Abdichtungsprobleme des Standes der Technik. Wesentlich ist nur, dass das Seilelement am Metallschlauch bzw. an den beiden Anschlussenden festgelegt ist und die geforderte axiale Zugkraft aufnehmen und vom axial nachgiebigen Metallschlauch abhalten kann.

Zur Festlegung des Seilelements an den Anschlussenden des Metallschlauchs ist es einerseits möglich, eine kraftschlüssige Art der Festlegung vorzusehen, beispielsweise das Seilelement zusammen mit der Ummantelung und einem Haltering am Anschlussende festzuquetschen, zum anderen kann aber auch eine form- oder auch eine stoffschlüssige Festlegungsart und insbesondere eine Schweißverbindung vorgesehen werden.

Sowohl das Integrieren des Seilelementes in die Ummantelung als auch das Festlegen des Seilelementes zusammen mit der Ummantelung weist aber einen wesentlichen Nachteil auf: Wie vorstehend erwähnt, schreibt die französische Gasnorm vor, dass zunächst eine Temperaturwiderstandsprüfung durchgeführt werden muss und erst anschließend der Zugkraftnachweis erbracht werden kann, was dazu führen würde, dass im Rahmen der Temperaturwiderstandsprüfung die in der Regel aus Kunststoff bestehende Ummantelung zerstört würde und dass hierdurch auch der Halt des Seilelements an der Ummantelung beeinträchtigt bzw. sogar ebenfalls mitzerstört würde und somit die Erbringung des Zugkraftnachweises nicht mehr möglich wäre. Eine solche Bauform würde somit nur der europäischen Gasnorm entsprechen und könnte nur auf dem außerfranzösischen Markt verwendet werden.

Aus den gleichen Gründen empfiehlt es sich auch zumindest für eine Verwendung der Gasleitung in Frankreich, das Seilelement aus Metall herzustellen, während ansonsten auch andere Materialien wie etwa Kevlar, Nylon und dergleichen möglich wäre, solange das entsprechend ausgebildete Seilelement zur Aufnahme der geforderten 1000 N in der Lage ist.

Weitere Merkmale und Vorteile der vorliegenden Erfindung ergeben sich aus der nachfolgenden Beschreibung dreier Ausführungsbeispiele anhand der Zeichnungen; hierbei zeigen
- Figur 1: ein Anschlussende einer erfindungsgemäßen flexiblen Gasleitung im Längsschnitt;
- Figur 2: eine weitere alternative Ausführungsform eines Anschlussendes einer erfindungsgemäßen flexiblen Gasleitung im Längsschnitt; und
- Figur 3: einen Radialschnitt durch die flexible Gasleitung gemäß Figur 2.

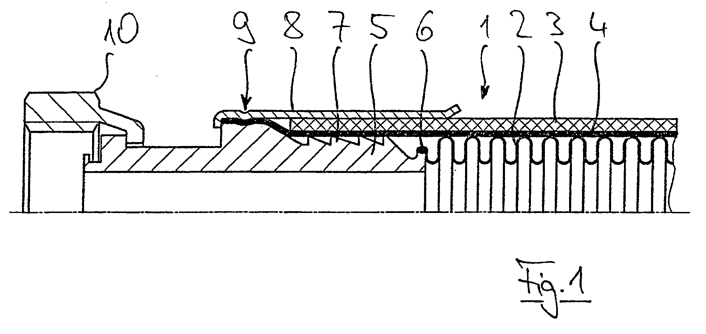

In Figur 1 ist eine flexible Gasleitung 1 dargestellt, die aus einem inneren ringgewellten Metallschlauch 2 und einer diesen umgebenden Ummantelung 3 in Form eines Kunststoffschlauches besteht. Zwischen Metallschlauch 2 und Ummantelung 3 ist ein Seilelement 4 eingefügt, das an einem Anschlussende 5 des Metallschlauchs bzw. der Gasleitung festgelegt ist (die ebenfalls erforderliche Festlegung am anderen, nicht dargestellten Anschlussende ist aus Figur 1 nicht ersichtlich).

Der Metallschlauch 2 ist über eine Schweißverbindung 6 am Anschlussende 5 festgelegt, welches zylindrisch ausgebildet ist und an seinem dem Metallschlauch zugewandten Ende neben der Schweißverbindung 6 eine widerhakenähnliche Außenprofilierung 7 aufweist, auf die der Kunststoffschlauch 3 aufgesteckt und festgelegt wird.

Im Bereich der Außenprofilierung 7 des Anschlusselementes 5 ist auch das Seilelement 4 zwischen Kunststoffschlauch 3 und Anschlusselement 5 eingefügt und durch die widerhakenähnliche Profilierung mit festgelegt, wobei sich das Seilelement 4 aber noch weiter in Überlappung mit dem Anschlusselement 5 in Richtung des freien Endes des Anschlusselementes erstreckt und dort von einem Endring 8 über eine Quetschverbindung 9 beaufschlagt und fixiert wird.

Der Endring 8 umgibt den Kunststoffschlauch 3 auch im Bereich der widerhakenähnlichen Profilierung 7 des Anschlusselementes 5 und sorgt somit für dessen dauerhafte Festlegung am Anschlusselement, indem er das radiale Ausweichen des Kunststoffschlauches 3 gegenüber der Profilierung nach außen unterbindet.

Das Anschlusselement 5 ist schließlich an seinem freien Ende mit einer Mutter 10 versehen, die zum Festlegen der Gasleitung 1 an einem nichtdargestellten Gasanschlusselement, einer Anschlussdose oder dergleichen dient.

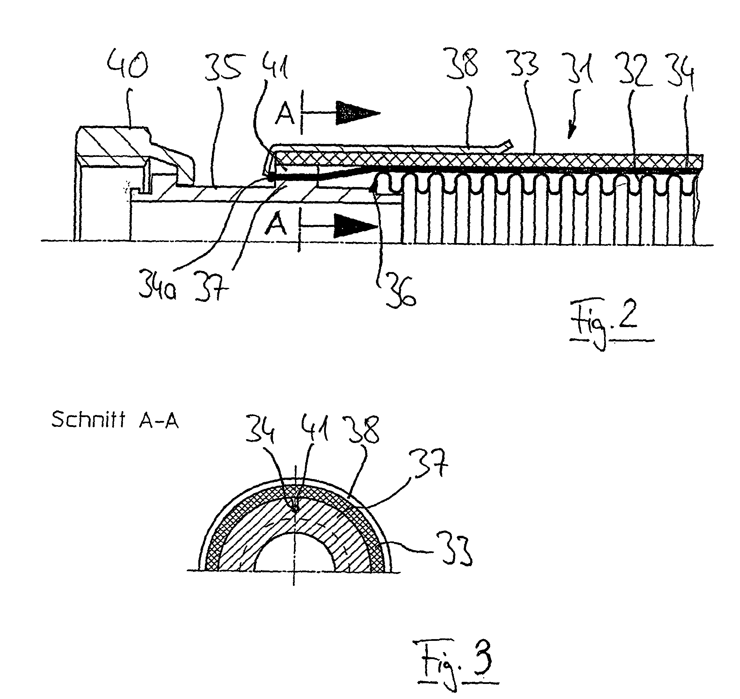

Figur 2 zeigt eine weitere Variante, bei der eine flexible Gasleitung 31 aus einem Metallschlauch 32 besteht, der über eine Schweißverbindung 36 an einem Anschlusselement 35 festgelegt ist, aus einem Kunststoffschlauch 33, der in flächige und ebene Anlage an einen zylindrischen umlaufenden radial nach außen vorstehenden Bord 37 des Anschlussendes 35 gebracht ist und über einen Außenring 38 an diesem festgelegt wird, sowie aus einem Seilelement 34, das zwischen Kunststoffschlauch 33 und Metallschlauch 32 angeordnet ist. Das Seilelement 34 ist an dem umlaufenden Bord 37 des Anschlussendes 35 dadurch festgelegt, dass es in eine schlitzförmige sich radial nach innen erstreckende Ausnehmung 41 des Bords eingelegt ist und an seinem hinter der Ausnehmung 41 und dem Bord 37 befindlichen Ende eine Querschnittsvergrößerung 34a aufweist, die einen größeren Durchmesser als die schlitzförmige Ausnehmung 41 besitzt und somit für eine formschlüssige Festlegung des Seilelements am Anschlusselement sorgt. Die Endhülse 38, die aus einer zylindrischen Erstreckungsrichtung radial nach innen abgebogen ist, beaufschlagt ebenfalls das Ende 34a des Seilelements 34 und sorgt so für dessen dauerhafte Fixierung und verhindert das Herausrutschen des Seilelements aus der Ausnehmung. Die schlitzförmige Ausnehmung 41 ist insbesondere in Figur 3, dem Radialschnitt entlang der Linie A-A aus Figur 2 erkennbar.

Aus beiden Varianten lässt sich ableiten, dass sowohl die Ausgestaltung des Seilelements als auch dessen Festlegung keinen großen Aufwand bereitet ganz im Gegensatz zu dem Geflechtsschlauch, der im Stand der Technik als Längenbegrenzungselement fungiert. Die beiden Ausführungsbeispiele zeigen auch, dass es zur Aufnahme der geforderten Zugbelastung von bis zu 1200 N erforderlich ist, das Seilelement ausreichend sicher am Anschlussende festzulegen, wobei die gezeigten Ausführungsbeispiele nur wenige von sicherlich vielen ähnlich funktionierenden Möglichkeiten zeigen. Zusammenfassend bietet die vorliegende Erfindung den Vorteil, eine normgerechte flexible Gasleitung zur Verfügung zu stellen, deren Längenbegrenzungselement in einfachster Weise ausgeführt ist und somit den Herstellungsaufwand erheblich reduziert. Dieser reduzierte Herstellungsaufwand kommt beispielsweise beim Festlegen eines Anschlussendes an einer aus einer Meterware abgelängten Gasleitung zum Tragen; denn beim Ablängen und Anschließen einer Gasleitung mit Geflechtsschlauch sorgt der Geflechtsschlauch aufgrund seiner Vielzahl zu einem seitlichen Ausweichen bzw. zu einem radialen Aufspringen neigender Geflechtsdrähte grundsätzlich für Bearbeitungs- und Montageprobleme.

## Patentansprüche

1. Flexible Gasleitung, insbesondere für den Anschluss von Haushaltsgasgeräten an Gasanschlussdosen und ähnliche Anschlusselemente, bestehend aus einem mit endständigen Anschlussenden (5, 35) versehenen gewellten Metallschlauch (2, 32), einer äußeren Ummantelung (3, 33) und einem Längenbegrenzungselement (4, 34) für den Metallschlauch,
**dadurch gekennzeichnet,**
**dass** das Längenbegrenzungselement aus zumindest einem sich parallel zum Metallschlauch zwischen den beiden Anschlussenden erstreckenden und an diesen Anschlussenden festgelegten Seilelement besteht, und dass das Seilelement (4, 34) zwischen Metallschlauch (2, 32) und Ummantelung (3, 33) angeordnet ist.

2. Flexible Gasleitung nach Anspruch 1,
**dadurch gekennzeichnet,**
**dass** das Seilelement (4) an den Anschlussenden (5) des Metallschlauches (2) kraftschlüssig festgelegt ist.

3. Flexible Gasleitung nach zumindest einem der vorstehenden Ansprüche,
**dadurch gekennzeichnet,**
**dass** das Seilelement an den Anschlussenden des Metallschlauches stoffschlüssig insbesondere durch Schweißen festgelegt ist.

4. Flexible Gasleitung nach zumindest einem der vorstehenden Ansprüche,
**dadurch gekennzeichnet,**
**dass** sich die Ummantelung (3, 33) zwischen den Anschlussenden (5, 35) erstreckt und an diesen festgelegt ist.

5. Flexible Gasleitung nach zumindest einem der vorstehenden Ansprüche,
**dadurch gekennzeichnet,**
**dass** die Ummantelung (3, 33) aus einem Kunststoffschlauch besteht.

6. Flexible Gasleitung nach zumindest einem der vorstehenden Ansprüche,
**dadurch gekennzeichnet,**
**dass** das Seilelement (4, 34) aus einem oder mehreren Drähten, Schnüren und dergleichen besteht.

7. Flexible Gasleitung nach zumindest einem der vorstehenden Ansprüche,
**dadurch gekennzeichnet,**
**dass** das Seilelement (4, 34) aus Metall besteht.

8. Flexible Gasleitung nach zumindest einem der vorstehenden Ansprüche,
**dadurch gekennzeichnet,**
**dass** das zumindest eine Seilelement (4, 34) achsparallel zum Metallschlauch (2, 32) verläuft.

## Claims

1. Flexible gas pipe, especially for the connection of domestic gas appliances to gas outlet sockets and similar connection elements, consisting of a corrugated flexible metal tube (2, 32) provided with terminal connection ends (5, 35), an outer casing (3, 33) and a length-limitation element (4, 34) for the flexible metal tube,
**characterised in that**
the length-limitation element consists of at least one cable element which extends, parallel to the flexible metal tube, between the two connection ends and is fixed at those connection ends; and the cable element (4, 34) is arranged between the flexible metal tube (2, 32) and the casing (3, 33).

2. Flexible gas pipe according to claim 1,
**characterised in that**
the cable element (4) is non-positively fixed at the connection ends (5) of the flexible metal tube (2).

3. Flexible gas pipe according to at least one of the preceding claims,
**characterised in that**
the cable element is fixed at the connection ends of the flexible metal tube by a bonded connection, especially by welding.

4. Flexible gas pipe according to at least one of the preceding claims,
**characterised in that**
the casing (3, 33) extends between the connection ends (5, 35) and is fixed at those ends.

5. Flexible gas pipe according to at least one of the preceding claims,
**characterised in that**
the casing (3, 33) consists of a flexible plastics tube.

6. Flexible gas pipe according to at least one of the preceding claims,
**characterised in that**
the cable element (4, 34) consists of one or more wires, cords and the like.

7. Flexible gas pipe according to at least one of the preceding claims,
**characterised in that**
the cable element (4, 34) consists of metal.

8. Flexible gas pipe according to at least one of the preceding claims,
**characterised in that**
the at least one cable element (4, 34) extends axially parallel to the flexible metal tube (2, 32).

## Revendications

1. Conduite flexible de gaz, notamment pour le raccordement de gazinières domestiques à des arrivées de gaz et éléments de raccordement similaires, comprenant un flexible métallique annelé (2, 32) muni d'extrémités saillantes de raccordement (5, 35), une gaine extérieure (3, 33) et un élément (4, 34) limitant la longueur dudit flexible métallique,
**caractérisée par le fait**
**que** l'élément limiteur de longueur est constitué d'au moins un élément du type câble s'étendant parallèlement au flexible métallique, entre les deux extrémités de raccordement, et bloqué sur ces extrémités de raccordement ; et par le fait que l'élément (4, 34) du type câble est interposé entre le flexible métallique (2, 32) et la gaine (3, 33).

2. Conduite flexible de gaz selon la revendication 1,
**caractérisée par le fait**
**que** l'élément (4) du type câble est bloqué mécaniquement sur les extrémités de raccordement (5) du flexible métallique (2).

3. Conduite flexible de gaz selon au moins l'une des revendications précédentes,
**caractérisée par le fait**
**que** l'élément du type câble est bloqué matériellement, notamment par soudage, sur les extrémités de raccordement du flexible métallique.

4. Conduite flexible de gaz selon au moins l'une des revendications précédentes,
**caractérisée par le fait**
**que** la gaine (3, 33) s'étend entre les extrémités de raccordement (5, 35) et est bloquée sur ces dernières.

5. Conduite flexible de gaz selon au moins l'une des revendications précédentes,
**caractérisée par le fait**
**que** la gaine (3, 33) est constituée d'un tuyau souple en matière plastique.

6. Conduite flexible de gaz selon au moins l'une des revendications précédentes,
**caractérisée par le fait**
**que** l'élément (4, 34) du type câble est constitué d'un ou plusieurs fil(s) métallique(s), cordon(s) et organe(s) similaire(s).

7. Conduite flexible de gaz selon au moins l'une des revendications précédentes,
**caractérisée par le fait**
**que** l'élément (4, 34) du type câble consiste en un métal.

8. Conduite flexible de gaz selon au moins l'une des revendications précédentes,
**caractérisée par le fait**
**que** l'élément (4, 34) du type câble, prévu au minimum, s'étend parallèlement à l'axe du flexible métallique (2, 32).
